# EUROPEAN PATENT SPECIFICATION

(11) **EP 3 085 236 B1**
(45) Date of publication and mention of the grant of the patent: **01.11.2017**
(21) Application number: 16166527.8
(22) Date of filing: 22.04.2016
(51) Int. Cl.: A21D 2/18, A21D 13/062, A21D 13/80

(54) **BREAKFAST CAKE WITH REDUCED SUGAR CONTENT**
FRÜHSTÜCKSKUCHEN MIT REDUZIERTEM ZUCKERGEHALT
GÂTEAU DE PETIT DÉJEUNER À TENEUR EN SUCRE RÉDUITE

(30) Priority: 24.04.2015 BE 201505275
(43) Date of publication of application: 26.10.2016
(73) Proprietor: Koninklijke Peijnenburg B.V., 5664 HB Geldrop (NL)
(72) Inventor: KRAMER, Marloes, 4133 HD Vianen (NL); VAN PARYS, Els, 9850 Nevele (BE); VANDER STICHELE, Jan, 9830 Sint-Martens-Latem (BE); VAN ABEELEN, Suzanne, 5508 WB Veldhoven (NL); NOORT, Martijn, 2595 DA 's Gravenhage (NL); JURGENS, Albert, 2595 DA 's Gravenhage (NL); RENZETTI, Stefano, 2595 DA 's Gravenhage (NL)
(74) Representative: Gevers Patents

(56) References cited:
- NL-A- 8 600 997

## Description

### SCOPE OF THE INVENTION

The present invention relates to the replacement of conventional sugars in cakes. In particular, the invention relates to breakfast cake, in English sometimes referred to as "gingerbread", whereby the content of conventional sugars was replaced to a great extent by other sweeteners, while the already known and trusted structure of breakfast cake is maintained.

### BACKGROUND OF THE INVENTION

In the Netherlands and Belgium, and also in the west of Germany, there is an important market demand for a special cake known as "breakfast cake" or "spice cake" in the Netherlands, and "pepper cake" in Belgium. The English term "gingerbread" has a broader meaning, encompassing "breakfast cake" together with harder biscuit-like variants. These names will be used interchangeably in this document, and indicate the same type of cake, which forms a unique offering among other commercially available cakes or pastries thanks to its brown colour in combination with its relatively high moisture content.

Typical for breakfast cake is also that for preparing the dough mainly, and often almost exclusively, rye flour is used. The choice to use mainly rye flour accounts at least partially for the typical soft and airy texture of breakfast cake. Apart from its use in breakfast cake, rye flour is used in rather few other commercial baked goods, other than bread. Rye flour is indeed an essential ingredient in rye bread ("pain de seigle"), and can also be found in "pepper nuts", "taaitaai" (also referred to as "taai" or "taai taai", usually anise-flavoured), and in crispbread ("Knackebrod"). Knäckebröd has, however, a much lower moisture content and sugar content than breakfast cake.

Breakfast cake has a very peculiar structure, rather tough than crispy, which is further characterized by a certain degree of elasticity by which the cake is able, after a slight compression, to return quite readily to approximately its original volume.

A further feature of breakfast cake is its sweet taste. The conventional recipes for breakfast cake therefore prescribe a high content of conventional sugars. The hitherto known commercial breakfast cakes typically comprise 35%wt to 45%wt of sugar. This makes the known breakfast cake, despite its low fat content, a concentrated source of the so-called conventional sugars, in the meaning as maintained in this document.

NL 2005131 describes a method for the preparation of dough for breakfast cake and the baking of breakfast cake.

Conventional sugars are, however, less and less desirable in commercial food products. It has therefore already been tried to develop "low-sugar" breakfast cake. Up to now, this appears to have been a very difficult job. We think that the reason for this is that without the conventional amounts of conventional sugars it is apparently still impossible to maintain the known structure of breakfast cake. The so far commercially available "low-sugar" breakfast cakes all comprise at least 23%wt of conventional sugars.

NL 8600997 describes a breakfast cake intended for diabetics whereby at least 86,85 % of the total amount of conventional sugars and diabetic sweeteners consists of sorbitol. The disadvantage of this breakfast cake is that these high levels of sorbitol usually have a laxative effect, already at a limited consumption, which is rather unpleasant for the consumer. In addition, sorbitol tends to crystalize at such high concentrations already within a period of a few weeks, well before the expiry of the prescribed shelf life of 15 weeks. This gives a white layer on the outer surface of the product, which makes the product unattractive to consumers.

There therefore remains a need for breakfast cake whereby at least 50% of the traditional level of conventional sugars are replaced by sweeteners, while the good structure is maintained, and yet the risk for a laxative effect remains limited.

The present invention has as objective to avoid or at least alleviate the problems described above and/or to generally provide improvements.

### SUMMARY OF THE INVENTION

According to the invention, there is provided a baked cake, a method for the production thereof, as well as a dough as an intermediate product in that preparation, as defined in each of the hereby enclosed claims.

In an embodiment, the present invention provides a baked cake comprising at least 15%wt of water on the basis of the total weight of the cake, and further comprising, on the basis of dry matter in the cake,
- at least 30%wt of flour, whereby at least 70%wt of the total amount of flour consists of rye flour,
- at most 5.0%wt of total fat,
- at least one added bulk sweetener, and
- at least 35%wt of the total of bulk sweeteners together with possibly further added conventional sugars, whereby the bulk sweetener is a carbohydrate having a molecular weight of at most 10000 g/mol, other than a conventional sugar,
   whereby a conventional sugar is a monosaccharide or a disaccharide with the exception of pure polyols, whereby the added conventional sugars represent at most 50%wt with respect to the total of added bulk sweeteners and the added conventional sugars,
   whereby the total of added bulk sweeteners and the added conventional sugars, insofar as the latter are present, have an average molecular weight, calculated on a number basis, Mn, the so-called "number average molecular weight", of at least 150 g/mol and at most 250 g/mol, and
   whereby at most 85% of all the added sweeteners, including the added conventional sugars, consist of polyols, including sugar alcohols, whereby the polyols have a molecular weight which is higher than the molecular weight of glucose.

We have found that the cake according to the present invention is a cake with about the correct gelatinization temperature, also known as "onset of starch gelatinization", to give the desired structure of breakfast cake, while the cake has a significantly reduced content of added conventional sugars without thereby in a disturbing way modifying the taste, and also while the risk remains strongly limited for laxative effect by consumption of the cake, and may even be avoided.

In another embodiment, the present invention provides a method for the production of a baked cake according to the present invention, comprising the steps of
a) the mixing of water and at least a part of the sweeteners to be added, in order to obtain a mixture,
b) optionally the heating of the mixture from step a) to a temperature of at least 85°C in order to obtain a warm mixture,
c) the mixing of the mixture from step a) or the warm mixture from step b) with at least a part of the flour in order to obtain a basic dough, also called hot dough,
d) the mixing of the basic dough with spices and other possible ingredients, as well as with the possible rest of the sweeteners to be added, in order to obtain a final dough, and
e) the baking of the final dough to obtain the baked cake.

In yet another embodiment, the present invention provides a dough suitable for the baking of the cake according to the present invention, comprising at least 15%wt of water on the basis of the total weight of the dough, and further comprising, on the basis of dry matter in the dough,
- at least 30%wt of flour, whereby at least 70%wt of the total amount of flour consists of rye flour,
- at most 5.0%wt of total fat,
- at least one added bulk sweetener, and
- at least 35%wt of the total of added bulk sweeteners together with possibly further added conventional sugars,
whereby the bulk sweetener is a carbohydrate having a molecular weight of at most 10000 g/mol, other than a conventional sugar,
whereby a conventional sugar is a monosaccahride or a discaccharide, with the exception of pure polyols, whereby the added conventional sugars represent at most 50%wt with respect to the total of the added bulk sweeteners and the added conventional sugars,
whereby the total of the added bulk sweeteners and the added conventional sugars, insofar as the latter are present, have an average molecular weight, calculated on a number basis, Mn, of at least 150 g/mol and at most 250 g/mol, and
whereby at most 85% of all the added sweeteners consist of polyols, including sugar alcohols, whereby the polyols have a molecular weight which is higher than the molecular weight of glucose.

It is noted within this context that, on the basis of dry matter, the final dough and the baked cake have an identical composition. The difference is in the structure of the ingredients that are present, in addition to the expected difference in water content. The basic dough differs fairly little from the final dough, on the condition that in step d) only a very limited amount of additional ingredients is added, as it is typically the case. Usually, only possibly some fat, baking powder, and spices are hereby added, usually representing a rough 2% of the total recipe on the basis of dry matter, and all the other ingredients are already fully processed into the basic dough. The limits imposed on the dough and/or on the baked cake according to the present invention, on the basis of dry matter, may therefore apply to the final dough and, under proviso of an adjustment by a factor of 1.02, unless an exact value is known from the actual recipe, for the basic dough.

We have found that this dough is a suitable basis for baking a cake according to the present invention, with the thereto related advantages that have already been cited above.

### DETAILED DESCRIPTION

The present invention will be described in the following with respect to particular embodiments and with reference to certain drawings but the invention is not limited thereto but only by the claims. Any drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, are used for distinguishing between similar elements and not necessarily for describing a sequential or chronological order. The terms are interchangeable under appropriate circumstances and the embodiments of the invention can operate in other sequences than described or illustrated herein.

Moreover, the terms top, bottom, over, under and the like in the description and the claims are used for descriptive purposes and not necessarily for describing relative positions. The terms so used are interchangeable under appropriate circumstances and the embodiments of the invention described herein can operate in other orientations than described or illustrated herein.

As used herein and in the claims, the terms "comprising" and "including" are inclusive or open-ended and do not exclude additional unrecited elements, compositional components, or method steps. Accordingly, the terms "comprising" and "including" encompass the more restrictive terms "consisting essentially of" and "consisting of."

An important parameter for the structure of breakfast cake is the gelatinization temperature or "onset temperature" of the dough. This is the temperature whereby the liquid dough changes into solid cake during the baking process. This parameter is preferably determined using a so-called Forced Resonance Analyzer according to the Dynamic Mechanical Thermal Analysis (DMTA) method, and whereby the temperature of the sample is increased during the analysis.

In this DMTA analysis, one proceeds more specifically as follows: preferably one works with a model dough, i.e. a simplified composition that only comprises the main ingredients: the (rye) flour, the sugars and/or sweeteners, and water. The dough is then obtained by dissolving the sugars and sweeteners into water and boiling this up to 102°C to form a heated mixture, thereby correcting for moisture loss. The mixing bowl of a Farinograph is brought to a temperature of 82°C, and therein the flour is drily premixed for 5 minutes and at a stirring speed of 30 rpm. The heated mixture is then added and the mixing is continued for approximately 2 minutes at 30 rpm. As such, a total amount of basic dough of e.g. 0.6 kg is prepared in the farinograph. In a next step, the dough is kept for 10 hours at 69°C in a Weiss room and ultimately for 1 hour at 8°C. After this rest in the Weiss room, 0.55 kg of the dough is placed in the farinograph and mixed for 9.5 minutes at 18°C and at a stirring speed of 30 rpm. Then, the so-obtained "final dough" is transferred into the rheometer for the DMTA test. For the DMTA analysis, we preferably use a TA-Instrument Discovery HR-2 (DHR2) type rheometer equipped with a 25 mm crosswise knurled ETC-type steel plate geometry, and an Environmental Test Chamber (ETC). The opening is set at 2000 microns. Slightly more than 1 ml of the dough is carefully placed on the base plate of the tool. After slowly lowering the top plate to the final opening distance, the dough which had been squeezed out beyond the plates is carefully removed, and the outer visible surface of the dough is coated with a paraffin oil by means of a brush. The sample is now conditioned during 5 minutes at 20°C. Then, the visco-elastic moduli are determined at a constant stress amplitude of 5*10⁻⁴ (-) and during a temperature ramping from 20°C to 120°C at a rate of 5 degrees Celsius per minute. The frequency that was used during the test is 1 Hz. The test provides as results a "storage modulus" (G'), and a "loss modulus" (G") expressed in pascal (Pa). From these values, each time the complex modulus (G* = √(G'2 + G"2)) may be calculated, which is then plotted in a graph as a function of the temperature. Typically, this curve shows a minimum as the temperature increases (the G* at the gelatinization temperature or "onset"), followed by a sharp increase in the Pa which indicates the gelatinization temperature (Tonset), which represent the two important "onset parameters".

Within the context of the present invention, the term "flour" is broadly defined as finely ground grain in all its forms, which is sometimes also called "meal" (FR: "farine", DE: "Mehl"), as well as the derivatives thereof which remain after the removal of bran or germs, and which are sometimes meant in a narrow interpretation in certain other circumstances as "superfine flour" (FR: "fleur de farine", DE: "Auszugsmehl"). In contrast to the narrow interpretation, the broad interpretation is therefore maintained within this context. Rye flour is therefore also whole meal rye flour, and wheat flour encloses therefore also the product which is called wheat meal. The inventors point out that this definition of flour deviates from the one used, for example, by the Dutch Food and Drugs Act. The Dutch Food and Drugs Act defines "meal" as "the primarily powdery goods, obtained by mincing or crushing the fruits of grain or the seeds of buckwheat, from which germs and parts of the peel may fully or partially have been removed, and from which, insofar as it involves barley, oats, rice, wild rice or buckwheat, the hulls have been removed", and is thereby very close to the way in which the term "flour" is defined in this document. The term "flour" is in the Dutch Food and Drugs Act more narrowingly defined as "meal, from which germs and parts of the peel are not visible with the naked eye". In Belgium, on the contrary, the term "meal" is barely used, and the term "flour" is often used in its wider sense.

Within the context of the present invention, are regarded as conventional sugars all monosaccharides and disaccharides, with the exception of pure polyols. The monosaccharides and/or disaccharides have a free carbonyl function, for example an aldehyde with glucose and a ketone with fructose, which at ring closure, dimerization, oligomerization, or polymerization, may equally form an ether function, or have at least one ether function, such as lactose, galactose, and sucrose.

Within the context of the present invention, the term "carbohydrates" represents the family of substances with the basic formula Cₘ(H₂O)ₙ. Technically spoken, carbohydrates are hydrates of carbon, but from a structural point of view it would be more correct to regard them as polyhydroxy aldehydes and ketones. In biochemistry, the term is regarded as a synonym for "saccharide", a group including sugars, but also starch and cellulose, and excluding the substances having only 1 or 2 carbon atoms (for example formaldehyde CH₂O). The saccharides are subdivided into four chemical groups: monosaccharides, disaccharides, oligosaccharides, and polysaccharides. The monosaccharides and disaccharides are regarded as "sugars", and within the present context as the "conventional sugars". The monosaccharides are the simplest carbohydrates that cannot be hydrolyzed further into smaller carbohydrates.

The conventional sugars belong to the family of the carbohydrates, but preferably within that context the members having only 1 or 2 carbon atoms are excluded from that family. Depending on the status of the carbonyl group, as an aldehyde or as a ketone function, one also addresses them as aldoses and ketoses. Depending on the number of carbon atoms, one calls them trioses (3), tetroses (4), pentoses (5), hexoses (6), and so on. A possibly useful definition for the conventional sugars which dominate in food products is that this term includes the total of all aldopentoses, hexopentoses, aldohexoses, ketohexose, and disaccharides of any two of these. Most of these monosaccharides may occur side by side on the one hand in an open form, and on the other hand in a closed ring form, i.e. a form whereby the aldehyde/ketone carbonyl group and a hydroxyl group have reacted to form a hemiacetal and an additional C-O-C bridge. Within each structural formula, usually in addition several stereoisomers may occur, due to the frequent presence of stereo centres, such as the carbon atoms carrying a hydroxyl function.

In particular, the following conventional sugars are used, together with their elementary chemical formula and their molecular weights:

| **Name** | **Formula** | **Mol Wt** |
|---|---|---|
| Glucose (5 OHs + 1 aldehyde/ether) | C₆H₁₂O₆ | 180.16 |
| Fructose (5 OHs + 1 ketone/ether) | C₆H₁₂O₆ | 180.16 |
| Galactose (5 OHs + 1 aldehyde/ether) | C₆H₁₂O₆ | 180.16 |
| Tagatose (5 OHs + 1 ketone/ether) | C₆H₁₂O₆ | 180.16 |
| Lactose (8 OHs + 3 ethers) | C₁₂H₂₂O₁₁ | 342.30 |
| Maltose (8 OHs + 3 ethers) | C₁₂H₂₂O₁₁ | 342.30 |
| Isomaltose (8 OHs + 3 ethers) | C₁₂H₂₂O₁₁ | 342.30 |
| Isomaltulose (8 OHs + 3 ethers) | C₁₂H₂₂O₁₁ | 342.30 |
| Saccharose (also known as sucrose) (8 OHs + 3 ethers) | C₁₂H₂₂O₁₁ | 342.30 |

Within the context of the present invention are considered as polyols all sweet tasting substances with only free OH functions, meaning that therein all oxygen atoms are only present in alcohol functions, and this with at least 3 free OH functions. This definition therefore excludes from the polyols the conventional sugars, as well as the bivalent glycols, such as ethylene glycol and the two possible propylene glycols. This definition does however include glycerol or glycerin. In particular, the following polyols are used, shown with their European registration number as food additive, their elementary chemical formula and their molecular weights:

| **Name** | **Labelling** | **Formula** | **Mol Wt** |
|---|---|---|---|
| Glycerol (3 OHs) | E 422 | C₃H₈O₃ | 92.09 |
| Erythritol (4 OHs) | E 968 | C₄H₁₀O₄ | 122.12 |
| Xylitol (5 OHs) | E 967 | C₅H₁₂0₅ | 152.15 |
| Sorbitol (6 OHs) Also used as sorbitol syrup | E 420 | C₆H₁₄O₆ | 182.17 |
| Mannitol (6 OHs) | E 421 | C₆H₁₄O₆ | 182.17 |

This definition of polyols deviates from the one which is used in the European legislation under EU regulation No 1169/2011 of 25 October 2011. Therein, polyols are more widely defined as "alcohols comprising more than two hydroxyl groups", and sugars are defined as "all mono- and disaccharides present in food, with the exception of polyols". The result is that when a food label mentions "polyols", that thereby are included all the polyols defined as such in this document within the context of the present invention, but also the "sugar alcohols" as defined further in this document in the context of the present invention.

Within the context of the present invention are considered as bulk sweeteners all carbohydrates having a molecular weight of at most 10000 g/mol, other than conventional sugars, and which still noticeably contribute to the "bulk" of the dough and/or the product, in other words the structure thereof. This is in contrast with the so-called "intensive" sweeteners, such as aspartame, which have high sweetening values, significantly higher than sucrose, and so high that only very small amounts may be used, amounts which are too insignificant to be able to contribute to the bulk of the dough and/or of the product.

A convenient definition of a bulk sweetener be those carbohydrates, defined above as the substances having the elementary formula Cₘ(H₂O)ₙ, but from which family preferably the members having only 1 or 2 carbon atoms are excluded, which are at least substantially soluble in water and preferably those having a molecular weight of at most 10 000 g/mol, preferably less than 10 000 g/mol. Being substantially soluble in water is hereby considered defined as being for at least 50%wt soluble in water at 100°C when mixed in a weight ratio of 1 part by weight of dietary fiber for 100 parts by weight of water, preferably for only 10 parts by weight of water.

Within the context of the present invention, a bulk sweetener according to this definition does not need to bring a sweet taste, or contribute to the sweet taste of the product in which it is incorporated. What is however essential is that the carbohydrate is used in an amount which contributes to the structure of the product, or of the dough thereof. This means that by the mere omission of this ingredient the structure of the obtained product is noticeably different. Optionally and for practical reasons, the upper limit in this definition may be reduced to at most 8000, preferably at most 7000, more preferably 6000, even more preferably at most 5000, preferably at most 4000, more preferably at most 3000, or even at most 1802. The substances with molecular weights above 1800, considering that the specification of the average molecular weight should be calculated on a number basis, are necessarily only present in the product in very small amounts. Because the average is calculated on a number basis and not on a weight basis, their contribution in the calculation is usually so small that they may be neglected. It is therefore usually sufficient, in the analysis of an unknown product, to restrict oneself to the carbohydrates having a molecular weight of at most 300, preferably at most 1800, for which simple "Ion Exchange Chromatography" analytical methods may be found. Within the context of the present invention, as bulk sweeteners are regarded the polyols as defined above, as well as the following groups and compounds, wherever possible shown with their European registration number as food additive, their elementary chemical formula and their molecular weights.
• oligosaccharides, i.e. oligomers with - on a number basis - an average degree of polymerization ("Dp") in the range of 3 to 10 monosaccharides. This definition thus excludes the dimers of monosaccharides, such as sucrose, maltose and lactose, which belong to the conventional sugars. Most of the industrial oligosaccharides are mixtures which may be characterized by an average molecular weight, calculated on a number basis, ("Mn"). Important are for example

| **Name** | **Formula** | **Mn** |
|---|---|---|
| oligofructose | Glu-Fruₙ (GFn) Or | This information is usually provided by the supplier. |
| (also called fructooligosaccharide (FOS), or oligofractan), | | |
| including: | Fruₘ (Fm) | Varying but always is the Mn>350. |
| kestose (GF2), nystose (GF3), fructosylnystose (GF4), bifurcose (GF3), inulobiose (F2), inulotriose (F3), and inulotetraose (F4) (*) | | |
| oligoxylose (XOS) | | idem |
| oligogalactose (GOS) | | idem |
| oligoarabinoxylan (AXOS) | | idem |
| lactosucrose | | idem |
| raffinose | | idem |
| resistant maltodextrins | | idem |
| cyclodextrins | | idem |

| | | |
|---|---|---|
| (*) G stands here for glucose and F stands for fructose | | |

• soluble dietary fibers, such as for example polydextrose (E1200: a synthetic polymer of glucose, possibly available in mixture with +/- 10% sorbitol and 1% citric acid) or soluble glucofibers. The term "soluble" is defined within this context as being for at least 50%wt soluble in water at 100°C when mixed in a weight ratio of 1 part by weight of dietary fiber for 10 parts by weight of water.
• the so-called sugar alcohols, such as for example:

| **Name** | **Labelling** | **Formula** | **Mol Wt** |
|---|---|---|---|
| Maltitol (9 OHs + 2 ether) Also used as maltitol syrup | E 965 | C₁₂H₂₄O₁₁ | 344.31 |
| Lactitol (9 OHs + 2 ether) | E 966 | C₁₂H₂₄O₁₁ | 344.31 |
| Isomalt (9 OHs + 2 ether) | E 953 | C₁₂H₂₄O₁₁ | 344.31 |

It should be noted in this context that in some sources these categories of bulk sweeteners are taken together and/or may have some overlap. For instance, oligosaccharides are sometimes considered as (short-chain) soluble dietary fibers, according to the way they behave in the human body.

In an embodiment of the present invention, the cake is suitable for being considered in the Netherlands as "breakfast cake" ("ontbijtkoek") or "spice cake" ("kruidenkoek"), and/or in Belgium as "pepper cake" ("peperkoek"). The inventors point out that these names are very specific, narrower in scope than the English term "gingerbread", and provide a clear distinction between these types of cake and all the other cakes or bisquits that are available in commerce. They are therefore also very recognizable for the consumer in Belgium, the Netherlands, and Germany, and define for these consumers a well-outlined category of consumer products, with well-known limits of where the concept starts and where it ends.

In an embodiment of the cake according to the present invention, the number based average molecular weight Mn of the total of the added extensive sweeteners and the added conventional sugars, insofar as the latter are present, is at least 160 g/mol, preferably at least 170 g/mol, more preferably at least 180 g/mol, even more preferably at least 190 g/mol, yet more preferably at least 195 g/mol, preferably at least 197 g/mol, more preferably at least 199 g/mol, even more preferably at least 202 g/mol, yet more preferably at least 204 g/mol, preferably at least 206 g/mol, more preferably at least 208 g/mol, even more preferably at least 210 g/mol, and optionally at most 240 g/mol, preferably at most 230 g/mol, more preferably at most 220 g/mol, even more preferably at most 210 g/mol, yet more preferable at most 208 g/mol, preferably at most 206 g/mol, more preferably at most 204 g/mol, even more preferably at most 202 g/mol, yet more preferably at most 200 g/mol. The inventors have found that respecting this feature ensures that the structure of the baked breakfast or spice cake approaches very closely the structure of the breakfast or spice cake as already known by the consumer, but with the so far usual amounts of conventional sugars. In this way, the low-sugar or sugar-free gingerbread and/or spice cake is an as faithful as possible copy of its known sugar-rich alternative, i.e. with a structure that is very similar, and possibly even without any to the common consumer noticeable differences.

In an embodiment of the present invention, at most 80%wt of all the added sweeteners consist of polyols, including sugar alcohols, whereby the polyols have a molecular weight which is higher than the molecular weight of glucose, preferably at most 75%, more preferably at most 60%, even more preferably at most 50%, preferably at most 30%, more preferably at most 20%, even more preferably at most 10% of all the added sweeteners. The inventors have found that limiting the presence of these polyols with higher molecular weight ensures that the product has a lower laxative effect. In addition, a lower contribution of the high molecular weight polyols ensures that the cake may more readily be properly baked. Also the structure will be more homogeneous, and the crumb of the baked cake will be more open, which is also favouring the elasticity of the product.

In an embodiment of the present invention, the cake comprises, on the basis of dry matter, at most 55%wt of flour, preferably at most 52%wt, more preferably at most 48%, even more preferably at most 45%, and optionally at least 33%wt of flour, preferably at least 35%wt, more preferably at least 37%wt, even more preferably at least 40%wt, and yet more preferably at least 42%wt of flour. Keeping the content of flour within these limits is a major contributing factor to obtaining a good structure of the baked cake. Insufficient flour would give insufficient structure, and the use of too much flour leads to a product which is too hard, which exhibits insufficient elasticity.

In an embodiment of the present invention, the flour in the cake and/or the dough consists of at least 73%wt of rye flour, preferably at least 75%wt, more preferably at least 80%wt, even more preferably at least 85%wt, preferably at least 90%wt, more preferably at least 95%wt, even more preferably at least 98%wt of rye flour. The preferred rye flour has a moisture content of 13.5%, an ash content of at least 0.50%wt on dry matter, and a protein content of about 8% on dry matter. The inventors have found that the gingerbread or spice cake retains its known structure, looks, and taste, if this condition is fulfilled. The inventors have found that if desired a part of the flour may be replaced by a flour different than rye flour, but that it is advantageous for the structure, the looks, and the taste, to provide an as high as possible portion of the flour as rye flour.

In an embodiment of the present invention, the cake and/or the dough comprises, in addition to rye flour, also wheat flour, spelt flour, or a combination thereof. The inventors have found that the rye flour is an essential ingredient of gingerbread and/or spice cake for obtaining good results, but that the rye flour may be partially replaced by another flour, such as wheat flour and/or spelt flour. The inventors have found that up to 25%wt of the rye flour may be replaced while good results remain achievable. Preferably, a flour is used which comprises, in comparison with rye flour, at most the same amount of starch that may be converted enzymatically into conventional sugars. This characteristic of convertibility of starch into conventional sugars is usually expressed as the "falling number", which may be measured according to standard AACC Method 56-81.03. The inventors have found that this partial replacement of rye flour by another flour may offer advantages with regard to the availability of the flour, which may offer a possible economic advantage depending on supply and demand in the market segments for these types of flour.

In an embodiment of the present invention, the cake comprises, on the basis of dry matter, at most 4.5%wt of total fat, preferably at most 4.0%wt, more preferably at most 3.5%wt, even more preferably at most 3.0%wt of total fat, preferably at most 2.5%wt, more preferably at most 2.0%wt of total fat. The inventors prefer to keep the fat level in the cake limited, which is favourable for the structure of the cake. This feature brings for instance the advantage that the cake does not feel sticky at all when touched or manually handled. Even more important is that limiting the fat content ensures that on the one hand the baked cake is not tough, and remains low, but on the other hand rises readily and well during the baking, so that the cake obtains and/or retains its typical elasticity.

In an embodiment of the present invention, at most 75% of the fat consist of added fat, preferably at most 60%, more preferably at most 50%, while the rest of the fat in the cake comes in as part of the other ingredients, mainly from the flour. The inventors have found that limiting the amount of added fat into the cake offers the advantage that the cake is not experienced by the consumer as being rich in fat, which increases the acceptability of the cake.

In an embodiment of the present invention, whereby the cake comprises added fat, the added fat comprises a vegetable oil or fat. This offers the advantage that the added fat, even though the amount may be limited, contributes further to the acceptability of the product by the consumer, especially for subgroups such as vegetarians or having specific religious convictions.

In an embodiment of the present invention, the cake comprises, on the basis of its total weight, at most 30%wt of water, preferably at most 27%, more preferably at most 25%, and optionally at least 17%wt, preferably at least 19%wt, more preferably at least 20%wt of water. The inventors have found that the water content of the cake is very important for the structure of the cake, but also for the way the consumer experiences the cake during manual handling, and also favourably influences the feeling in the mouth. With an insufficient water content the cake is too hard, and with an excessive water content the desired shelf life of the cake may be jeopardized.

In an embodiment of the present invention, the cake comprises at least two different bulk sweeteners, preferably at least 3 different bulk sweeteners. The inventors have found that the use of several bulk sweeteners in the substitution of conventional sugars offers the advantage that it is easier to obtain the desired structure of the cake, which should approach as closely as possible the one of the known cake based on conventional sugars.

In an embodiment of the present invention, the at least one added bulk sweetener is selected from the list consisting of polyols having at least 3 alcohol functions, oligosaccharides, soluble dietary fibers, sugar alcohols, and combinations thereof. The inventors have found that the bulk sweeteners from this list are particularly suitable for at least partially replacing conventional sugars in breakfast cake and/or spice cake, and this while the structure of the cake may be retained and remains very comparable to the one of the known sugar-rich variant.

In an embodiment of the present invention, the at least one added bulk sweetener is a polyol which is selected from the list consisting of glycerol, erythritol (E 968), xylitol (E 967), sorbitol (E 420), sorbitol syrup, mannitol (E 421), and combinations thereof. The inventors have found that the polyols from this list are very suitable in the context of the present invention.

In an embodiment of the present invention, the at least one added bulk sweetener is an oligosaccharide which has been selected from the list consisting of an oligofructose, also known as fructooligosaccharide (FOS), oligoxylose (XOS), oligogalactose (GOS), oligoarabinoxylan (AXOS), lactosucrose, raffinose, resistant maltodextrins, cyclodextrins, and combinations thereof. The inventors have found that the bulk sweeteners from this list are very suitable in the context of the present invention. An important feature of these sweeteners is that their molecular weight is generally higher than this of the conventional sugars, which allows for the simultaneous use of bulk sweeteners having a molecular weight which is lower than that of conventional sugars, together with the sweeteners from this list, which offers advantages in the development of the appropriate recipe to obtain and/or retain the desired structure of the cake in the substitution of the conventional sugars.

In an embodiment of the present invention, the at least one added bulk sweetener is a soluble dietary fiber which has been selected from the list consisting of polydextrose (E1200), soluble glucofibers, and combinations thereof. Also these bulk sweeteners have a relatively high molecular weight, so that the use thereof offers room for a use together with bulk sweeteners having a molecular weight which is lower than this of the conventional sugars which are desirably replaced, even if only partially.

In an embodiment of the present invention, the at least one added bulk sweetener is a sugar alcohol which is selected from the list consisting of maltitol (E 965), lactitol (E 966), isomalt (E 953), and combinations thereof. These substances have a relatively high molecular weight, and therefore also offer the advantages of their alternatives having that same feature, which have already been discussed above.

In an embodiment of the present invention, the cake comprises xylitol as the at least one added bulk sweetener. The inventors have found that xylitol is particularly suitable for use in the context of the present invention, because xylitol is well accepted as an extensive sweetener in the food industry, and thus meets little to no resistance as ingredient of a consumer product such as breakfast cake or spice cake.

In an embodiment of the present invention, the cake comprises, in addition to xylitol, also at least a second and different added bulk sweetener. The inventors have found that xylitol may readily be combined with a second and different bulk sweetener, and that the combination thereof allows ample room for developing a suitable recipe for low-sugar or sugar-free breakfast cake or spice cake.

In an embodiment of the present invention comprising at least a second and different added bulk sweetener, the at least second bulk sweetener is selected from an oligosaccharide, amongst which are oligofructose (FOS), oligoxylose (XOS) and oligogalactose (GOS), a polyol, including glycerol, a soluble dietary fiber, including soluble glucofibers, and combinations thereof. The inventors have found that this combination is very favourable for obtaining the desired structure of breakfast cake and/or spice cake, and yet allows significant liberty in the development of the recipe.

In an embodiment of the present invention comprising at least one second and different added bulk sweetener, the at least second bulk sweetener is a mixture of at least two extensive sweeteners selected from the list consisting of an oligosaccharide, amongst which are oligofructose (FOS), oligoxylose (XOS) and oligogalactose (GOS), a polyol, including glycerol, a soluble dietary fiber, including soluble glucofibers, and combinations thereof. The inventors have found that this combination is very favourable for obtaining the desired structure of breakfast cake and/or spice cake, and yet allows significant room in the development of the recipe.

In an embodiment of the present invention whereby the cake comprises xylitol together with at least one other bulk sweetener, the weight ratio of the amount of bulk sweeteners being different from xylitol relative to the amount of xylitol is in the range of 1:1 to 15:1, preferably in the range of 1.0:1.0 to 15.0:1.0, more preferably at least 2.0:1.0, even more preferably at least 4.0:1.0, preferably at least 5.0:1.0, preferably at least 6.0:1.0, and optionally at most 14.0:1.0, preferably at most 12.0:1.0, more preferably at most 10.0:1.0, preferably at most 9.0:1.0 and more preferably at most 8.0:1.0. The inventors have found that this ratio offers a very favourable result regarding the combination of looks, structure, feel, and mouthfeel of the cake according to the present invention.

In an embodiment of the present invention, the cake comprises at most 70%wt, on the basis of dry matter, of the total of added bulk sweeteners together with the possibly further added conventional sugars, preferably at most 65%, more preferably at most 60%, even more preferably at most 56%, and optionally at least 40%, preferably at least 45%wt, more preferably at least 50%, even more preferably at least 53%wt. The inventors have found that this level for the total of the in this feature prescribed substances offers a highly suitable combination of taste, structure, and mouthfeel of the cake according to the present invention.

In an embodiment of the present invention, the cake comprises, on the basis of dry matter, at most 22.0%wt of added conventional sugars, preferably at most 20%wt, more preferably at most 15%wt, even more preferably at most 10.0%wt, preferably at most 5.0%wt, more preferably at most 3.0%wt, even more preferably at most 2.0%wt, preferably at most 1.5%wt, preferably no added conventional sugars. In the context of the present invention the conventional sugars may be caramelized. These conventional sugars may also be added fully or partially as honey. The inventors have found that the present invention manages to replace a significant portion of the conventional sugars, present in the known breakfast cake and spice cake, by alternative sweeteners which are more recommendable in the context of "globesity", i.e. the concern with an excessive consumption of conventional sugars in the daily diet of the modern human being. The inventors have found that the present invention makes it possible, if desired, to replace almost or even completely all conventional sugars in breakfast cake and/or spice cake.

In an embodiment of the present invention, the added conventional sugars represent at most 45%wt with respect to the total of the added bulk sweeteners together with the added conventional sugars, preferably at most 40%, more preferably at most 30%, even more preferably at most 25%, preferably at most 20%, more preferable at most 10%, even more preferably at most 5%, preferably at most 2%, even more preferably at most 1%. Preferably, there are no conventional sugars added into the cake according to the present invention. The inventors have found that this feature increases the attractiveness of the cake according to the present invention, certainly for the consumer who becomes increasingly more sensitive about his consumption of conventional sugars.

In an embodiment of the present invention, the cake further comprises an intensive sweetener. The inventors have found that the use of small amounts of one or more intensive sweeteners offers even more room to freely select the other ingredients of the recipe, while the desired characteristics of the cake may still be approached and/or maintained, and this while a similar experience with regard to sweetness of the taste may be assured.

Within the context of the present invention, intense sweeteners are substances with a high sweetening value, i.e. so high a sweetening value that only very small amounts of these substances should be used, amounts which are of insufficient importance in order to contribute to the bulk of the dough and/or the baked product. Within the context of the present invention, the intense sweeteners are not taken into account for the determination of the average molecular weight, calculated on a number basis, of the added sweeteners and sugars. This is because these intense sweeteners do not contribute to the structure of the obtained cake.

In an embodiment of the method in accordance with the present invention, product rework, also called side cake or "return cake", is added in step a). The inventors prefer to partially use product rework in the production process, because this favourably influences the taste, the looks, and the mouthfeel of the cake. The incorporation of product rework into the dough also brings the advantage that the viscosity of the dough is increased, probably because the product rework comprises starch that has already been (pre)gelatinized. The product rework may also comprise some sugars which have already been caramelized, which has a favourable effect on the taste and the colour, not only of the dough but also of the final product. Preferably, a level of product rework is used in the end product of at least 5%wt, more preferably at least 7%, more preferably at least 8%, and optionally at most 20%, preferably at most 15%, more preferably at most 12%wt. In relation to the dough composition, these limits need to be reduced to approximately 90%, due to the higher water content of the dough in comparison with the baked end product. With a level of product rework below the specified limits, one runs the risk that most of the favourable effects become reduced or even lost. Using a higher content than the indicated upper limits brings the disadvantage that a larger proportion of the baking oven throughput must be recycled, and therefore does not readily ends up as final product.

In an embodiment of the method in accordance with the present invention, whereby product rework is added in step a), in step a) is also added the enzyme α-amylase, preferably in an amount of 1 to 3 grams per kg of breakfast cake, preferably in the form of diastatic malt, preferably wheat malt. The inventors have found that the addition of the enzyme at this stage of the process allows to rework higher levels of product rework into the dough, which under high "reject" rates may bring an economic advantage, because the reject product ends up in a higher value destiny than the possible alternatives. This also brings the advantage that less so-called "syrup", such as oligofructose syrup, may be used for obtaining the desired colour and taste in the end product.

In an embodiment of the method in accordance with the present invention, whereby in step a) the enzyme α-amylase is added, the pH of the mixture with the enzyme is in the range of 4.0 to 7.0, preferably at least 5.0 and optionally at most 6.0. The inventors have found that the enzyme exhibits at this pH a higher activity, and the desired effect is therefore obtained in a shorter time and/or at a lower temperature and/or at a lower dose.

In an embodiment of the method in accordance with the present invention, in step c) the total of the flour as prescribed in the recipe is mixed in to obtain the basic dough. This feature keeps the entire method relatively easy, and makes it easier to guarantee the full recipe of the cake.

In an embodiment of the method in accordance with the present invention, in step a) the total of the added sweeteners is mixed in as prescribed in the recipe. Also this keeps the method easy, and the closing in on the entire prescribed recipe more easy.

In an embodiment of the method in accordance with the present invention, in step b) the mixture from step a) is heated up to a temperature of at least 90°C. The inventors have found that this feature brings the advantage that the result of the method is less dependent on potentially unintentional deviations from the prescriptions, and that therefore the quality of the final cake may be better assured.

In an embodiment of the method in accordance with the present invention, the basic dough from step c) has a temperature of at least 65°C. Also this feature brings the advantage of a more predictable product quality, also in the case of unintentional deviations from the prescriptions.

In an embodiment of the method in accordance with the present invention, the basic dough is cooled, before the mixing of step d), preferably without any further mixing, for a period of at least 1 hour, preferably at least 4 hours, more preferably at least 8 hours, even more preferably at least 16 hours, preferably at least 20 hours, and yet more preferably at least 24 hours. The basic dough thereby receives the chance to rest for some time, preferably for the prescribed time period. During this resting in between the steps c) and d), the basic dough cools down and time is allowed for particular chemical processes. The inventors have found that this cooling and resting has a very favourable effect on the characteristics of the finished product, mainly concerning its structure, looks, hand feel, and mouthfeel.

In an embodiment of the method in accordance with the present invention, whereby the basic dough is cooled, the basic dough is cooled to a temperature in the range of 15 to 35°C, preferably at most 30°C, more preferably at most 25°C, even more preferably to approximately room temperature, whereby in the context of the present invention is understood a range of 20-23°C. The inventors have found that reaching this temperature has a positive impact on the quality of the baked cake. The inventors have found that this cooling feature brings a very favourable effect on the characteristics of the finished product, mainly concerning its structure, looks, hand feel, and mouthfeel.

In an embodiment of the method in accordance with the present invention, are added in step d), in addition to the spices which are preferably cake spices and even more preferably breakfast cake spices, also baking powder, sodium pyrophosphate, sodium bicarbonate, food acid such as lactic acid, sorbic acid, citric acid, acetic acid and/or malic acid, or a combination thereof. Each one of these additives brings its own contribution to the production of the cake and/or to the quality of the finished product.

In an embodiment of the method in accordance with the present invention, the spices in step d) comprise breakfast cake spices. These spices contribute significantly to the taste experience of the consumer.

In an embodiment of the method in accordance with the present invention, the final dough in step e) is baked during at least 45 minutes, and preferably at a temperature of about 180°C. The method according to the present invention may, for example, bake the cake at 190±5°C for a time of approximately 65±5 minutes. In another embodiment, the cake is baked in a tunnel furnace having a total passage time of 65±5 minutes, whereby the tunnel furnace is split up in 7 segments having approximately the same residence time and having from inlet to outlet respectively the following upper/lower temperatures (in °C, and with a tolerance of ±5 degrees Celsius): 130/120, 175/160, 180/170, 183/173, 186/176, 190/178, 170/165.

In an embodiment of the present invention, the dough comprises at least 18%wt and/or at most 33%wt of water, calculated on the total weight of the dough, preferably at least 18.0%, more preferably at least 20%, even more preferably at least 23%, preferably at least 25%wt, and optionally at most 32%, preferably at most 30%wt of water. The inventors have found that the water content of the dough of the cake is very important in view of the structure of the cake and of a decent progress of the baking process, but also for the way the consumer experiences the cake by manual handling, but also how it favourably affects the mouthfeel.

In an embodiment of the present invention, the dough comprises, on the basis of dry matter, at most 55%wt of flour, preferably at most 52%wt, more preferably at most 48%, even more preferably at most 45%, and optionally at least 33%wt of flour, preferably at least 35%wt, more preferably at least 37%wt, even more preferably at least 40%wt, and yet more preferably at least 42%wt of flour. In this way, a desired flour content is assured in the final baked cake, which is an important component for the taste but also for obtaining the good structure.

In an embodiment of the present invention, the dough comprises, on the basis of dry matter, at most 60%wt of the total of added bulk sweeteners together with possibly further added conventional sugars, preferably at most 58%, more preferably at most 56%, and optionally at least 40%, preferably at least 45%wt, more preferably at least 50%wt. In this way, a desired sweetener content is ensured in the final baked cake, which is a very important taste component for breakfast cake.

### ANALYTICAL TECHNIQUES

For determining the content of dietary fibers in a cake or a dough, the applicants preferably use the method of the known standard AOAC 2011.25. With this method, the individual levels of insoluble fibers (outside our scope as extensive sweetener), soluble high molecular dietary fibers, and soluble low molecular dietary fibers may be determined.

For determining the amount of flour in a cake or a dough, the inventors preferably use the Dumas method (AACC 46-30), preferred over the Kjeldahl method, to first determine the level of nitrogen (N), and to subsequently convert this into the level of proteins. On the packaging of the cake, or from the recipe of the dough, one also knows which type of flour was used in the preparation. One also knows how much protein this flour typically comprises, so that one may also determine the level of flour through arithmetic conversion.

To determine the total amount of fat in a cake or a use dough, the inventors preferably use the method in accordance with standard ISO 1443:1973.

To determine the presence in a cake or a dough of the sugar alcohols, the mono- and disaccharides, and the oligosaccharides (up to a meaningful upper limit of the molecular weight or degree of polymerization (DP), in the latter case preferably up to at most 10), the inventors preferably use a technique which is known as "High Performance Anion-Exchange Chromatography with Pulsed Amperometric Detection (HPAE-PAD)", more preferably in the way that this technique is described in Technical Note 20, with the title "Analysis of Carbohydrates by High-Performance Anion-Exchange Chromatography with Pulsed Amperometric Detection (HPAE-PAD)", published in 2004 by the company DIONEX Corporation (US), if necessary in conjunction with the documents to which this Technical Note 20 refers for more details. This technical note is available via the internet URL: http://www.dionex.com/en-us/webdocs/5023-TN20_LPN032857-04.pdf.

Mono- and disaccharides are preferably determined by means of a 10-µm-diameter "polystyrene/divinylbenzene substrate agglomerated with 350-nm quaternary amine functionalized latex column material", available as CarboPac PA1. Oligosaccharides and longer chain (linear) polysaccharides may be determined using the same column material as for the mono- and disaccharides (i.e. the CarboPac PA1), or alternatively using a 10-µm-diameter "ethylvinylbenzene/divinylbenzene substrate agglomerated with 350-nm quaternary amine functionalized latex column material", available as CarboPac PA100. Polyols and sugar alcohols may be determined using a 8.5-µm-diameter "vinylbenzyl chloride/divinylbenzene macroporous substrate fully functionalized with an alkyl quaternary ammonium group column material", available as CarboPac MA1.

Preferably, the inventors proceed thereby as follows. From a sample of the product to be analysed, the carbohydrates which are of importance are first extracted using a large excess of water, for example 100 millilitres of water against only 1 gram of sample. This aqueous extract is then purified by filtration through a 0.45 micron filter, and then subjected to the HPAE-PAD technique. The analysis of the mono-, di-, tri-, oligo- and polysaccharides, and sugar alcohols, is performed with each time the most appropriate chromatographic column and the most appropriate eluent (such as sodium hydroxide and/or sodium acetate). The selection of the most appropriate column and/or the most appropriate eluent may depend on the composition of the product to be analysed. Usually, the inventors prefer to use a CarboPac PA1 Carbohydrate Column for the mono- and di-saccharides, a CarboPac MA1 Carbohydrate Column for the sugar alcohols, and a CarboPac PA1 and/or a PA100 Carbohydrate Column for the oligosaccharides (DP3-DP10). As already mentioned, it may be appropriate, in order to optimize the separation between the different carbohydrates, to adapt the selection of column and/or eluent to the nature of the sample to be analysed. The inventors have found that an experienced analyst, after a limited number of tests, may determine fairly readily the optimum combination of columns and eluents for a specific sample.

The inventors have found that the presence of polysaccharides with a DP higher than 10 may be neglected, because the calculation of the Mn must be made on the basis of the number of molecules (and therefore not on a weight basis). The result is that any contribution of these high molecular polysaccharides is too small to have any effect on the Mn of all contributing substances together. The inventors therefore prescribe that in the analysis, as well as in the calculation of the Mn, all the polysaccharides with a DP>10 may and even should be excluded.

The texture or structure of a baked cake may be measured with a texture analysis device, for example the SMS Texture Analyzer Type HDi or XT2i, available from Ostfildern, Germany, whereby from a force-time diagram measured for a 2-cycle compression test, for example a hardness (expressed in Newton) and a cohesiveness (dimensionless) of a specific sample of the cake may be derived. Also the density of the cake is usually an important factor, and may be determined using conventional techniques.

### EXAMPLE

A breakfast cake without added conventional sugars was produced as follows.

In the first place, a mixture was made of 17 parts by weight of water, 20 parts of oligofructose syrup, comprising 75%wt of dry matter (=15 parts) and 25% of water (=5 parts), 16 parts of xylitol (Mwt = 152.15), 4 parts of glycerol (Mwt = 92.09), and 11 parts of product rework, also called side cake, rework or cake crumbs. This mixture was heated up to a temperature of 95°C in order to obtain a warm mixture or brew.

The warm mixture was mixed with 32 parts of rye flour until a hot dough or basic dough was obtained. The rye flour comprised 13.5%wt of water, and thus 86.5%wt of dry matter. Due to the ratio of heated mixture to flour, the temperature of the basic dough was eventually approximately 70°C. This basic dough was left resting and cooling during 24 hours.

After the resting, the basic dough was further mixed with 0.7 parts of fat (in this case palm oil), 0.7 parts of baking powder (a mixture of sodium bicarbonate and sodium pyrophosphate), and 0.3 parts of breakfast cake spices, in order to obtain the final dough. The final dough was divided into baking tins up to a height of about 2.5 cm, after which a small amount of wheat flour was sprinkled on the top surface to improve the manipulability of the final product.

The baking tins with the final dough were baked in an oven at about 190°C for about 1 hour, in order to obtain the breakfast cake. The baking was carried out such that the baked cake had a water content of 22.0%wt.

The contribution of all the components in the composition of the basic dough, the final dough, and the breakfast cake may be calculated as summarized in Table 1. Several ingredients comprise an amount of water, and this is each time isolated in order to monitor the amounts of "dry matter". The product rework is supposed to have a composition which is identical to the one of the finally baked cake. The content level of particular ingredients is therefore calculated on the basis of the total excluding the product rework, and that content level may then by extrapolation be assigned to the total, including the product rework.

**Table 1**

| | **Water** | **Parts by weight** | | |
|---|---|---|---|---|
| | **%** | **Total** | **Water** | **Dry matter** |
| Water | 100% | 17 | 17 | |
| Olipofructose syrup | 25.00% | 20 | 5 | 15 |
| Xylitol | | 16 | | 16 |
| Glycerol | | 4 | | 4 |
| Total of bulk sweeteners | | | | 35.0 |
| Product rework | 22.00% | 11 | 2.420 | 8.580 |
| Rye flour | 13.50% | 32 | 4.320 | 27.680 |
| **Basic dough** | **28.74%** | **100** | **28.740** | **71.260** |
| | | | | |
| Fat | | 0.7 | | 0.7 |
| Baking powder | 37% | 0.7 | 0.259 | 0.441 |
| Spices | 15% | 0.3 | 0.045 | 0.255 |
| **Final dough** | **28.56%** | **101.7** | **29.044** | **72.656** |
| | | | | |
| **After the baking** | **22.0%** | **93.15** | **20.49** | **72.66** |

The breakfast cake comprised 4.20%wt of conventional sugars, on the basis of the total final product, which mainly originated from the naturally present sugars in the rye flour. On the basis of the sugar content levels of the used raw materials, one could calculate this content of conventional sugars. It was thereby assumed that the product rework had the same composition as the part of the composition without the product rework. The conventional sugars originated mainly from the rye flour and also for a small portion from the oligofructose syrup. Indeed, the latter still comprised about 5% of conventional residual sugars on the basis of dry matter.

The oligofructose syrup for this cake was obtained from the company Tereos Syral under the brand name Actilight 950S and according to the supplier the dry matter therein had an Mn of 565. The Mn of all the added sugars and added bulk sweeteners together in the baked cake could therefore be calculated as follows:

| | Mol Wt (Mn) | Parts by weight (g) | gmol |
|---|---|---|---|
| Dry substance in the Actilight 950S | 565 | 15 | 0.026549 |
| Xylitol | 152.15 | 16 | 0.105159 |
| Glycerol | 92.09 | 4 | 0.043436 |
| Total of extensive sweeteners | | **35** | **0.175144** |

The Mn of all the bulk sweeteners was therefore 35/0.175144 = 200 g/mol (rounded to the integer).

In this calculation, the contribution of the product rework was not included in the result. It was assumed that the product rework (by definition) had the same composition as the recipe without the product rework, so in this case Mn=200. Also the naturally present sugars in the flour were not taken into account for the Mn. The contribution of the rest of the conventional sugars in the added oligofructose syrup is comprised in the Mn of the syrup.

The basic dough for the breakfast cake in this example comprised (15+16+4)/(71.260-8.580) = 35/62.680 = 55.84%wt of added bulk sweeteners including conventional sugars, on the basis of dry matter, calculated on the basis of the total of dry matter without the product rework. Under the assumption that the product rework had an almost identical composition on the basis of dry matter, this content level applies therefore also to the entire basic dough. Converted to the final dough, this content level is 55.84*100/101.7=54.91%. Because the content level is expressed on the basis of dry matter, this content level applies also to the baked cake.

Conventional sugars were indirectly added as part of the oligofructose syrup, and this up to a content level of 5% of 15 parts, i.e. 0.75 parts, which on the basis of dry matter and excluding the product rework gives 0.75/62.680 = 1.20% in the basic dough, and *100/101.7 = 1.18% in the final dough and in the baked cake.

The content level of flour in the basic dough is, on the basis of dry matter and excluding the product rework 27.680/62.680 = 44.16%wt. This becomes 43.42%wt in the final dough and equally high in the baked cake, always on the same basis.

The content level of added fat, to the final dough and to the baked cake, as always on the basis of dry matter, is 0.7/(72.656-8.580) = 0.7/64.076 = 1.1%wt.

The oligofructose syrup still contained 5%wt of conventional sugars. The amount of added conventional sugars is therefore 5/100*15 = 0.75 parts. On the basis of dry matter, this is, as calculated above, a content level of 0.75/62.680 = 1.20%wt in the basic dough, 1.18%wt in the final dough and in the baked cake.

The water content of the basic dough, on the basis of the total weight, is 28.74%wt, of the final dough 28.56%wt, and of the baked cake the targeted 22.0%wt.

The content level of polyols, expressed on the basis of all the added sweeteners together, i.e. bulk sweeteners and conventional sugars together, is 4/35 = 11.4%wt.

The cake and the dough contained three bulk sweeteners, namely xylitol, glycerol, and oligofructose. The content level of oligofructose is only 15.0 - 0.75 = 14.25, corrected for the conventional sugars in the oligofructose syrup. The weight ratio of (net oligofructose + glycerol) / xylitol is (14.25+4)/16 = 1.14/1.00. The contribution of the added conventional sugars therefore represent 0.75 / 35 = 2.14%wt to the total of added bulk sweeteners and added conventional sugars. The cake and the dough do not comprise any intensive sweetener.

This breakfast cake without added conventional sugars was by a sensory panel compared with the commercial breakfast cake which as their standard product is available in several sizes from the company "Koninklijke Peijnenburg B.V.", established in Geldrop, the Netherlands. The tasting panel found no noticeable differences in taste, colour, elasticity, texture and/or structure between the two products.

Also the water activity and the "hardness" were measured using a texture analyzer, and the values for this breakfast cake were found to deviate not significantly with respect to the standard product.

Having now fully described this invention, it will be appreciated by those skilled in the art that the invention may be performed within a wide range of parameters within what is claimed, without departing from the scope of the invention, as defined by the claims.

## Claims

1. A baked cake comprising,
• at least 15%wt of water on the basis of the total weight of the cake, and further comprising, on the basis of dry matter in the cake,
• at least 30%wt of flour, whereby at least 70%wt of the total amount of flour consists of rye flour,
• at most 5.0%wt of total fat,
• at least one added bulk sweetener, and
• at least 35%wt of the total of added bulk sweeteners together with possibly further added conventional sugars,
whereby the bulk sweetener is a carbohydrate having a molecular weight of at most 10000 g/mol, other than a conventional sugar,
whereby a conventional sugar is a monosaccharide or a disaccharide, with the exception of pure polyols,
whereby the added conventional sugars represent at most 50%wt of the total amount of added bulk sweeteners and added conventional sugars,
whereby the total of the added bulk sweeteners and the added conventional sugars, insofar as the latter are present, have an average molecular weight, calculated on a number basis, Mn, of at least 150 g/mol and at most 250 g/mol, and
whereby at most 85%wt of all the added sweeteners, including the added conventional sugars, consist of polyols, including sugar alcohols, whereby the polyols have a molecular weight which is higher than the molecular weight of glucose.

2. The cake according to claim 1 which is suitable to be considered as "breakfast cake" or "spice cake" in the Netherlands, and/or as "pepper cake" in Belgium.

3. The cake according to claim 1 or 2 whereby the number based average molecular weight Mn of the total of the added bulk sweeteners and the added conventional sugars, insofar as the latter are present, is at least 160 g/mol, preferably at least 170 g/mol, more preferably at least 180 g/mol, even more preferably at least 190 g/mol, yet more preferably at least 195 g/mol, preferably at least 197 g/mol, and optionally at most 240 g/mol, preferably at most 230 g/mol, more preferably at most 220 g/mol, even more preferably at most 210 g/mol, yet more preferably at most 208 g/mol.

4. The cake according to any one of the preceding claims whereby at most 80%wt of all the added sweeteners consist of polyols, including sugar alcohols, which have a molecular weight which is higher than the molecular weight of glucose, preferably at most 75%, more preferably at most 60%, even more preferably at most 50%, preferably at most 30%, more preferably at most 20%, even more preferably at most 10% of all the added sweeteners.

5. The cake according to any one of the preceding claims comprising at least two different bulk sweeteners, preferably at least 3 different bulk sweeteners.

6. The cake according to any one of the preceding claims whereby the at least one added bulk sweetener is selected from the list consisting of polyols with at least 3 alcohol functions, oligosaccharides, soluble dietary fibers, sugar alcohols, and combinations thereof.

7. The cake according to any one of the preceding claims whereby the at least one added bulk sweetener is a polyol selected from the list consisting of glycerol, erythritol (E 968), xylitol (E 967), sorbitol (E 420), sorbitol syrup, mannitol (E 421), and combinations thereof.

8. The cake according to any one of the preceding claims whereby the at least one added bulk sweetener is an oligosaccharide selected from the list consisting of an oligofructose, also known as fructooligosaccharide (FOS), oligoxylose (XOS), oligogalactose (GOS), oligoarabinoxylan (AXOS), lactosucrose, raffinose, resistant maltodextrins, cyclodextrins, and combinations thereof.

9. The cake according to any one of the preceding claims whereby the at least one added bulk sweetener is a soluble dietary fiber selected from the list consisting of polydextrose (E1200), soluble glucofibers, and combinations thereof.

10. The cake according to any one of the preceding claims comprising xylitol as the at least one added bulk sweetener.

11. The cake according to any one of the preceding claims comprising, on the basis of dry matter, at most 22.0%wt of added conventional sugars, preferably at most 20%wt, more preferably at most 15%wt, even more preferably at most 10.0%wt, preferably at most 5.0%wt, more preferably at most 3.0%wt, even more preferably at most 2.0%wt, preferably at most 1.5%wt, preferably no added conventional sugars.

12. A method for the production of a baked cake according to any one of the preceding claims, comprising the steps of
a) the mixing of water and at least a part of the sweeteners to be added,
b) optionally the heating of the mixture from step a) to a temperature of at least 85°C in order to obtain a warm mixture,
c) the mixing of the mixture from step a) or the warm mixture from step b) with at least a part of the flour in order to obtain a basic dough, also called hot dough,
d) the mixing of the basic dough with spices and other possible ingredients, as well as with the possible rest of the sweeteners to be added and flour, in order to obtain a final dough, and
e) the baking of the final dough to obtain the baked cake.

13. The method according to the preceding claim whereby in step a) "product rework", also called "side cake" or "return cake", is added.

14. The method according to any one of the claims 12-13 whereby the total amount of the flour is added in step c) in order to obtain the basic dough.

15. A dough suitable for the baking of the cake according to any one of the claims 1-11, comprising
• at least 15%wt of water on the basis of the total weight of the dough, and further comprising, on the basis of dry matter in the dough,
• at least 30%wt of flour, whereby at least 70%wt of the total amount of flour consists of rye flour,
• at most 5.0%wt of total fat,
• at least one added bulk sweetener, and
• at least 35%wt of the total of added bulk sweeteners together with possibly further added conventional sugars,
whereby the bulk sweetener is a carbohydrate having a molecular weight of at most 10000 g/mol, other than a conventional sugar,
whereby a conventional sugar is a monosaccharide or a disaccharide, with the exception of pure polyols,
whereby the added conventional sugars represent at most 50%wt of the total amount of the added bulk sweeteners and the added conventional sugars,
whereby the total of the added bulk sweeteners and the added conventional sugars, insofar as the latter are present, have an average molecular weight, calculated on a number basis, Mn, of at least 150 g/mol and at most 250 g/mol, and
whereby at most 85%wt of all the added sweeteners consist of polyols, including sugar alcohols, whereby the polyols have a molecular weight which is higher than the molecular weight of glucose.

## Patentansprüche

1. Ein gebackener Kuchen, welcher Folgendes enthält:
• mindestens 15 Gew.-% Wasser auf Grundlage des Gesamtgewichts des Kuchens, und welcher ferner, auf Grundlage der Trockenmasse im Kuchen, Folgendes enthält:
• mindestens 30 Gew.-% Mehl, wobei mindestens 70 Gew.-% der Gesamtmenge an Mehl aus Roggenmehl bestehen,
• höchstens 5,0 Gew.-% an Gesamtfett,
• mindestens einen hinzugefügten Zuckeraustauschstoff, und
• mindestens 35 Gew.-% der Gesamtmenge an hinzugefügten Zuckeraustauschstoffen zusammen mit möglicherweise weiteren hinzugefügten herkömmlichen Zuckern,
wobei der Zuckeraustauschstoff ein Kohlenhydrat mit einer Molekülmasse von höchstens 10.000 g/mol ist, anders als ein herkömmlicher Zucker,
wobei ein herkömmlicher Zucker ein Monosaccharid oder ein Disaccharid ist, ausgenommen reine Polyole,
wobei die hinzugefügten herkömmlichen Zucker höchstens 50 Gew.-% der Gesamtmenge an hinzugefügten Zuckeraustauschstoffen und hinzugefügten herkömmlichen Zuckern darstellen,
wobei die Gesamtmenge der hinzugefügten Zuckeraustauschstoffe und der hinzugefügten herkömmlichen Zucker, sofern Letztere vorhanden sind, eine durchschnittliche Molekülmasse, berechnet auf einer Zahlenbasis, Mn, von mindestens 150 g/mol und höchstens 250 g/mol haben, und
wobei höchstens 85 Gew.-% aller hinzugefügten Süßstoffe, einschließlich der hinzugefügten herkömmlichen Zucker, aus Polyolen, einschließlich von Zuckeralkoholen, bestehen, wobei die Polyole eine Molekülmasse haben, die höher ist als die Molekülmasse von Glucose.

2. Der Kuchen nach Anspruch 1, der geeignet ist, um als "Frühstückskuchen" oder "Gewürzkuchen" in den Niederlanden, und/oder als "Pfefferkuchen" in Belgien betrachtet zu werden.

3. Der Kuchen nach Anspruch 1 oder 2, wobei die zahlenbasierte durchschnittliche Molekülmasse Mn der Gesamtmenge an hinzugefügten Zuckeraustauschstoffen und an hinzugefügten herkömmlichen Zuckern, sofern Letztere vorhanden sind, mindestens 160 g/mol beträgt, bevorzugt mindestens 170 g/mol, noch besser mindestens 180 g/mol, sogar noch besser mindestens 190 g/mol, jedoch noch besser mindestens 195 g/mol, bevorzugt mindestens 197 g/mol, und optional höchstens 240 g/mol, bevorzugt höchstens 230 g/mol, noch besser höchstens 220 g/mol, sogar noch besser höchstens 210 g/mol, jedoch noch besser höchstens 208 g/mol.

4. Der Kuchen nach irgendeinem der vorigen Ansprüche, wobei höchstens 80 Gew.-% aller hinzugefügten Süßstoffe aus Polyolen, einschließlich von Zuckeralkoholen, bestehen, welche eine Molekülmasse haben, die höher als die Molekülmasse von Glucose ist, bevorzugt höchstens 75 %, noch besser höchstens 60 %, sogar noch besser höchstens 50 %, bevorzugt höchstens 30 %, noch besser höchstens 20 %, sogar noch besser höchstens 10 % aller hinzugefügten Süßstoffe.

5. Der Kuchen nach irgendeinem der vorigen Ansprüche, welcher mindestens zwei verschiedene Zuckeraustauschstoffe enthält, bevorzugt mindestens 3 verschiedene Zuckeraustauschstoffe.

6. Der Kuchen nach irgendeinem der vorigen Ansprüche, wobei der zumindest eine hinzugefügte Zuckeraustauschstoff aus der Liste bestehend aus Polyolen mit mindestens 3 Alkoholfunktionen, Oligosacchariden, löslichen Ballaststoffen, Zuckeralkoholen, und Kombinationen davon ausgewählt ist.

7. Der Kuchen nach irgendeinem der vorigen Ansprüche, wobei der zumindest eine hinzugefügte Zuckeraustauschstoff ein Polyol ist, ausgewählt aus der Liste bestehend aus Glycerol, Erythritol (E 968), Xylitol (E 967), Sorbitol (E 420), Sorbitolsirup, Mannitol (E 421), und Kombinationen davon.

8. Der Kuchen nach irgendeinem der vorigen Ansprüche, wobei der zumindest eine hinzugefügte Zuckeraustauschstoff ein Oligosaccharid ist, ausgewählt aus der Liste bestehend aus einer Oligofructose, auch bekannt als Fructooligosaccharid (FOS), Oligoxylose (XOS), Oligogalactose (GOS), Oligoarabinoxylan (AXOS), Lactosucrose, Raffinose, resistenten Maltodextrinen, Cyclodextrinen, und Kombinationen davon.

9. Der Kuchen nach irgendeinem der vorigen Ansprüche, wobei der zumindest eine hinzugefügte Zuckeraustauschstoff ein löslicher Ballaststoff ist, ausgewählt aus der Liste bestehend aus Polydextrose (E 1200), löslichen Glucofasern, und Kombinationen davon.

10. Der Kuchen nach irgendeinem der vorigen Ansprüche, welcher Xylitol als den zumindest einen hinzugefügten Zuckeraustauschstoff enthält.

11. Der Kuchen nach irgendeinem der vorigen Ansprüche, welcher, auf Grundlage von Trockenmasse, höchstens 22,0 Gew.-% hinzugefügter herkömmlicher Zucker enthält, bevorzugt höchstens 20 Gew.-%, noch besser höchstens 15 Gew.-%, sogar noch besser höchstens 10,0 Gew.-%, bevorzugt höchstens 5,0 Gew.-%, noch besser höchstens 3,0 Gew.-%, sogar noch besser höchstens 2,0 Gew.-%, bevorzugt höchstens 1,5 Gew.-%, bevorzugt keine hinzugefügten herkömmlichen Zucker.

12. Ein Verfahren zur Herstellung eines gebackenen Kuchens nach irgendeinem der vorigen Ansprüche, welches folgende Schritte umfasst:
a) Mischen von Wasser und zumindest einem Teil der hinzuzufügenden Süßstoffe,
b) optional Erwärmen der Mischung aus Schritt a) auf eine Temperatur von mindestens 85°C, um eine warme Mischung zu erhalten,
c) Mischen der Mischung aus Schritt a) oder der warmen Mischung aus Schritt b) mit zumindest einem Teil des Mehls, um einen Basisteig zu erhalten, auch warmer Teig genannt,
d) Mischen des Basisteigs mit Gewürzen und anderen möglichen Zutaten, sowie mit dem möglichen Rest der hinzuzufügenden Süßstoffe und Mehl, um einen endgültigen Teig zu erhalten, und
e) Backen des endgültigen Teigs, um den gebackenen Kuchen zu erhalten.

13. Das Verfahren nach dem vorigen Anspruch, wobei in Schritt a) "wiederaufgearbeitetes Produkt", auch "Nebenkuchen" oder "Rückführkuchen" genannt, hinzugefügt wird.

14. Das Verfahren nach irgendeinem der Ansprüche 12 bis 13, wobei die Gesamtmenge des Mehls in Schritt c) hinzugefügt wird, um den Basisteig zu erhalten.

15. Ein Teig geeignet zum Backen des Kuchens nach irgendeinem der Ansprüche 1 bis 11, welcher Folgendes enthält:
• mindestens 15 Gew.-% Wasser auf Grundlage des Gesamtgewichts des Teigs, und welcher ferner, auf Grundlage der Trockenmasse im Teig, Folgendes enthält:
• mindestens 30 Gew.-% Mehl, wobei mindestens 70 Gew.-% der Gesamtmenge an Mehl aus Roggenmehl bestehen,
• höchstens 5,0 Gew.-% an Gesamtfett,
• mindestens einen hinzugefügten Zuckeraustauschstoff, und
• mindestens 35 Gew.-% der Gesamtmenge an hinzugefügten Zuckeraustauschstoffen zusammen mit möglicherweise weiteren hinzugefügten herkömmlichen Zuckern,
wobei der Zuckeraustauschstoff ein Kohlenhydrat mit einer Molekülmasse von höchstens 10.000 g/mol ist, anders als ein herkömmlicher Zucker,
wobei ein herkömmlicher Zucker ein Monosaccharid oder ein Disaccharid ist, ausgenommen reine Polyole,
wobei die hinzugefügten herkömmlichen Zucker höchstens 50 Gew.-% der Gesamtmenge der hinzugefügten Zuckeraustauschstoffe und der hinzugefügten herkömmlichen Zucker darstellen,
wobei die Gesamtmenge der hinzugefügten Zuckeraustauschstoffe und der hinzugefügten herkömmlichen Zucker, sofern Letztere vorhanden sind, eine durchschnittliche Molekülmasse, berechnet auf einer Zahlenbasis, Mn, von mindestens 150 g/mol und höchstens 250 g/mol haben, und
wobei höchstens 85 Gew.-% aller hinzugefügten Süßstoffe aus Polyolen, einschließlich von Zuckeralkoholen, bestehen, wobei die Polyole eine Molekülmasse haben, die höher ist als die Molekülmasse von Glucose.

## Revendications

1. Gâteau cuit au four comprenant,
• au moins 15 % en poids d'eau sur la base du poids total du gâteau, et comprenant en outre, sur la base de la matière sèche dans le gâteau,
• au moins 30 % en poids de farine, moyennant quoi au moins 70 % en poids de la quantité totale de farine est constituée de farine de seigle,
• au plus 5,0 % en poids de matière grasse totale,
• au moins un édulcorant de charge ajouté, et
• au moins 35 % en poids du total d'édulcorants de charge ajoutés conjointement avec des sucres classiques ajoutés en plus,
moyennant quoi l'édulcorant de charge est un glucide ayant une masse moléculaire d'au plus 10 000 g/mol, autre qu'un sucre classique,
moyennant quoi un sucre classique est un monosaccharide ou un disaccharide, à l'exception des polyols purs,
moyennant quoi les sucres classiques ajoutés représentent au plus 50 % en poids de la quantité totale d'édulcorants de charge ajoutés et de sucres classiques ajoutés,
moyennant quoi le total des édulcorants de charge ajoutés et des sucres classiques ajoutés, dans la mesure où ces derniers sont présents, présente une masse moléculaire moyenne, calculée sur une base en nombre, Mn, d'au moins 150 g/mol et d'au plus 250 g/mol, et
moyennant quoi au plus 85 % en poids de tous les édulcorants ajoutés, y compris les sucres classiques ajoutés, sont constitués de polyols, y compris des alcools de sucre, moyennant quoi les polyols ont une masse moléculaire qui est plus élevée que la masse moléculaire du glucose.

2. Gâteau selon la revendication 1, qui est approprié pour être considéré en tant que « gâteau pour petit déjeuner » ou « pain d'épice » au Pays-Bas, et/ou en tant que « peperkoek » en Belgique.

3. Gâteau selon la revendication 1 ou 2, selon lequel la masse moléculaire moyenne en nombre Mn du total des édulcorants de charge ajoutés et des sucres classiques ajoutés, dans la mesure où ces derniers sont présents, est d'au moins 160 g/mol, de préférence au moins 170 g/mol, plus préférablement au moins 180 g/mol, encore plus préférablement au moins 190 g/mol, encore plus préférablement au moins 195 g/mol, de préférence au moins 197 g/mol, et éventuellement au plus 240 g/mol, de préférence au plus 230 g/mol, de préférence encore au plus 220 g/mol, encore plus préférablement au plus 210 g/mol, encore plus préférablement au plus 208 g/mol.

4. Gâteau selon l'une quelconque des revendications précédentes, selon lequel au plus 80 % en poids de tous les édulcorants ajoutés sont constitués de polyols, y compris des alcools de sucre, qui ont une masse moléculaire qui est plus élevée que la masse moléculaire de glucose, de préférence au plus 75 %, de préférence encore, au plus 60 %, encore plus préférablement au plus 50 %, de préférence au plus 30 %, de préférence encore au plus 20 %, encore plus préférablement au plus 10 % de tous les édulcorants ajoutés.

5. Gâteau selon l'une quelconque des revendications précédentes, comprenant au moins deux édulcorants de charge différents, de préférence au moins 3 édulcorants de charge différents.

6. Gâteau selon l'une quelconque des revendications précédentes, selon lequel ledit au moins un édulcorant de charge ajouté est choisi dans la liste constituée de polyols avec au moins 3 fonctions alcool, d'oligosaccharides, des fibres diététiques solubles, d'alcools de sucre et de leurs combinaisons.

7. Gâteau selon l'une quelconque des revendications précédentes, selon lequel ledit au moins un édulcorant de charge ajouté est un polyol choisi parmi la liste constituée de glycérol, érythritol (E 968), xylitol (E 967), sorbitol (E 420), sirop de sorbitol, mannitol (E 421), et leurs combinaisons.

8. Gâteau selon l'une quelconque des revendications précédentes, selon lequel ledit au moins un édulcorant de charge ajouté est un oligosaccharide choisi parmi la liste constituée d'un oligofructose, également connu sous le nom de fructo-oligosaccharide (FOS), oligoxylose (XOS), oligogalactose (GOS), oligo-arabinoxylane (AXOS), lactosaccharose, raffinose, maltodextrines résistantes, cyclodextrines et leurs combinaisons.

9. Gâteau selon l'une quelconque des revendications précédentes, selon lequel ledit au moins un édulcorant de charge ajouté est une fibre diététique soluble choisie parmi la liste constituée de polydextrose (E1200), glucofibres solubles, et leurs combinaisons.

10. Gâteau selon l'une quelconque des revendications précédentes, comprenant du xylitol en tant que ledit au moins un édulcorant de charge ajouté.

11. Gâteau selon l'une quelconque des revendications précédentes, comprenant, sur la base de la matière sèche, au plus 22,0 % en poids de sucres classiques ajoutés, de préférence au plus 20 % en poids, de préférence encore au plus 15 % en poids, encore plus préférablement au plus 10,0 % en poids, de préférence au plus 5,0 % en poids, de préférence encore au plus 3,0 % en poids, encore plus préférablement au plus 2,0 % en poids, de préférence au plus 1,5 % en poids, de préférence aucun sucre classique ajouté.

12. Procédé de fabrication d'un gâteau cuit au four selon l'une quelconque des revendications précédentes, comprenant les étapes suivantes
a) le mélange d'eau et d'au moins une partie des édulcorants à ajouter,
b) éventuellement le chauffage du mélange provenant de l'étape a) à une température d'au moins 85 °C afin d'obtenir un mélange chaud,
c) le mélangeage du mélange provenant de l'étape a) ou du mélange chaud provenant de l'étape b) avec au moins une partie de la farine afin d'obtenir une pâte de base, également appelée pâte chaude,
d) le mélange de la pâte de base avec des épices et d'autres ingrédients éventuels, ainsi qu'avec le reste éventuel des édulcorants à ajouter et de la farine, afin d'obtenir une pâte finale, et
e) la cuisson au four de la pâte finale de façon à obtenir le gâteau cuit au four.

13. Procédé selon la revendication précédente, selon lequel, à l'étape a) un « retravail de produit », également appelé « gâteau annexe » ou « gâteau de retour », est ajouté.

14. Procédé selon l'une quelconque des revendications 12 à 13, selon lequel la quantité totale de la farine est ajoutée à l'étape c) afin d'obtenir la pâte de base.

15. Pâte appropriée pour la cuisson au four du gâteau selon l'une quelconque des revendications 1 à 11, comprenant
• au moins 15 % en poids d'eau sur la base du poids total de la pâte, et comprenant en outre, sur la base de la matière sèche dans la pâte,
• au moins 30 % en poids de farine, moyennant quoi au moins 70 % en poids de la quantité totale de farine est constituée de farine de seigle,
• au plus 5,0 % en poids de matière grasse totale,
• au moins un édulcorant de charge ajouté, et
• au moins 35 % en poids du total d'édulcorants de charge ajoutés conjointement avec des sucres classiques ajoutés en plus,
moyennant quoi l'édulcorant de charge est un glucide ayant une masse moléculaire d'au plus 10 000 g/mol, autre qu'un sucre classique,
moyennant quoi un sucre classique est un monosaccharide ou un disaccharide, à l'exception des polyols purs,
moyennant quoi les sucres classiques ajoutés représentent au plus 50 % en poids de la quantité totale d'édulcorants de charge ajoutés et des sucres classiques ajoutés,
moyennant quoi le total des édulcorants de charge ajoutés et des sucres classiques ajoutés, dans la mesure où ces derniers sont présents, présente une masse moléculaire moyenne, calculée sur une base en nombre, Mn, d'au moins 150 g/mol et d'au plus 250 g/mol, et
moyennant quoi au plus 85 % en poids de tous les édulcorants ajoutés sont constitués de polyols, y compris des alcools de sucre, moyennant quoi les polyols ont une masse moléculaire qui est plus élevée que la masse moléculaire du glucose.
